(19) Europäisches Patentamt
European Patent Office
Office européen des brevets

(11) **EP 3 217 617 A1**

(12) **EUROPEAN PATENT APPLICATION**

(43) Date of publication:
**13.09.2017   Bulletin 2017/37**

(51) Int Cl.:
***H04L 25/02*** *(2006.01)*

(21) Application number: **16159014.6**

(22) Date of filing: **07.03.2016**

| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD** | (71) Applicant: **Intel IP Corporation**<br>**Santa Clara, CA 95054 (US)**<br><br>(72) Inventor: **FECHTEL, Stefan**<br>**85604 Zorneding (DE)**<br><br>(74) Representative: **Patentanwälte Lambsdorff & Lange**<br>**Dingolfinger Strasse 6**<br>**81673 München (DE)** |

(54) **SYNTHESIS DEVICE AND SYSTEM FOR GENERATING CHANNEL ESTIMATION FILTER COEFFICIENTS**

(57)   A synthesis device (200) for generating a set of dynamic channel estimation (CE) filter coefficients (207) for a user equipment includes: a synthesis parameter generator (201), configured to generate a set of quasi-static synthesis parameters (202) from a reference symbol (RS) time-frequency pattern (300) and a set of slowly changing channel parameters (216), wherein the set of quasi-static synthesis parameters (202) is derived from a channel autocorrelation matrix ($\mathbf{R}_h$) and at least one cross-correlation vector ($\mathbf{r}_h$), and the set of slowly changing channel parameters (216) are derived from delay and Doppler power profiles (210) of a physical channel; a memory (203) configured to store the set of quasi-static synthesis parameters (202); and a CE filter coefficient generator (205), configured to generate a set of dynamic CE filter coefficients ($\mathbf{w}$, 207) based on the set of quasi-static synthesis parameters (202), and a set of dynamic parameters (218) given by a cross modulation ($\mathbf{D}$, 214) between RS signals from different cells (c) with cell-specific modulations, and a noise and interference SINR autocorrelation ($\Gamma$, 212).

Fig. 2

EP 3 217 617 A1

## Description

FIELD

The disclosure relates to a synthesis device, a synthesis system and a method for generating channel estimation (CE) filter coefficients for a user equipment, in particular CE filter coefficients for multi-layer OFDM channel estimation in 4G and 5G mobile networks.

BACKGROUND

In both homogenous and heterogeneous cellular mobile networks, the mobile user equipment (UE) is faced not only with varying channel conditions but also multiple interfering cells whose signals and channels likewise exhibit time/frequency-selective behavior. Channel estimation (CE) filtering, which is key to the proper receiver operation, must therefore be ready to master multiple conditions which can be grouped into the following five categories: 1) reference signal used for CE: RS type and pattern (CRS, DMRS, etc), possibly variant, depending on the standard, transmission mode, logical channel, time, frequency, etc; 2) channel: physical channel parameters, in particular, delay and Doppler spreads/shifts; 3) interference: presence and strength of interfering cell signals, their types (RS, payload, etc) and dynamics (per SF, per PRB, etc) ; 4) noise: level of thermal noise and background interference; and 5) synchronization: frontend/AGC non-idealities affecting channel estimation.

LTE-Advanced "3GPP TS 36.211, Physical channels and modulation" stipulates two important use-cases where common reference symbols (CRS) of an aggressor cell (A-CRS) collide with serving-cell RS (S-CRS) intended for channel estimation: 1) FeICIC (further enhanced inter-cell interference and coordination): Rel-11 LTE feature calling for CRS interference cancellation (CRS-IC), i.e., suppression of the aggressor A-CRS signal and delivery of the purged serving-cell channel estimate S-CE; and 2) NAICS (network-assisted interference cancellation and suppression): Rel-12 LTE feature calling for joint detection (all S/A-payload layers) and corresponding joint channel estimation, i.e., delivery of both serving-cell (S-CE) and aggressor (A-CE) channel estimates from the same set of pilot/reference signals (here colliding CRS).

It may thus be desirable to provide a new technique for improving channel estimation for fast adaptation to dynamic changes of conditions as described above, in particular with respect to the scenario where reference symbols designed for serving-cell channel estimation are heavily disturbed by interfering reference symbols.

BRIEF DESCRIPTION OF THE DRAWINGS

The accompanying drawings are included to provide a further understanding of aspects and are incorporated in and constitute a part of this specification. The drawings illustrate aspects and together with the description serve to explain principles of aspects. Other aspects and many of the intended advantages of aspects will be readily appreciated as they become better understood by reference to the following detailed description. Like reference numerals designate corresponding similar parts.

Fig. 1 is a schematic diagram of a heterogeneous network 100 including a macro cell 101 and pico cells 103, 105 according to an interference scenario.

Fig. 2 is a block diagram of a synthesis device 200 for generating channel estimation filter coefficients for a user equipment.

Fig. 3 is a schematic diagram of a reference symbol time-frequency pattern 300 comprising a first signal layer 310, a second signal layer 320 and an noise and interference layer 330.

Fig. 4 is a block diagram of an exemplary synthesis device 400 for generating channel estimation filter coefficients for a user equipment as an embodiment of the synthesis device 200 shown in Fig. 2.

Fig. 5 is a schematic diagram of a method 500 for generating channel estimation filter coefficients for a user equipment.

Fig. 6a is a histogram 600a illustrating mean square error (MSE) performance for an example of dual-layer RS CE coefficient synthesis for SNR=0dB and nonselective SINR.

Fig. 6b is a histogram 600b illustrating mean square error (MSE) performance for an example of dual-layer RS CE coefficient synthesis for SNR=10dB and nonselective SINR.

Fig. 6c is a histogram 600c illustrating mean square error (MSE) performance for an example of dual-layer RS CE coefficient synthesis for SNR=20dB and nonselective SINR.

Fig. 6d is a histogram 600d illustrating mean square error (MSE) performance for an example of dual-layer RS CE coefficient synthesis for SNR=30dB and nonselective SINR.

Fig. 7a is a histogram 700a illustrating mean square error (MSE) performance for an example of dual-layer RS CE coefficient synthesis for SNR=0dB and selective SINR=-10dB.

Fig. 7b is a histogram 700b illustrating mean square error (MSE) performance for an example of dual-layer RS CE coefficient synthesis for SNR=10dB and selective SINR=-10dB.

Fig. 7c is a histogram 700c illustrating mean square error (MSE) performance for an example of dual-layer RS CE coefficient synthesis for SNR=20dB and selective SINR=-10dB.

Fig. 7d is a histogram 700d illustrating mean square error (MSE) performance for an example of dual-layer RS CE coefficient synthesis for SNR=30dB and selective SINR=-10dB.

Fig. 8 is a performance diagram 800 illustrating an exemplary MAC (multiply-and-add) complexity of dual-layer CE coefficient synthesis for dynamic SINR.

Fig. 9 is a performance diagram 900 illustrating an exemplary MAC (multiply-and-add) complexity of dual-layer CE coefficient synthesis for static SINR.

DETAILED DESCRIPTION

In the following detailed description, reference is made to the accompanying drawings, which form a part thereof, and in which is shown by way of illustration specific aspects in which the invention may be practiced. It is understood that other aspects may be utilized and structural or logical changes may be made without departing from the scope of the present invention. The following detailed description, therefore, is not to be taken in a limiting sense, and the scope of the present invention is defined by the appended claims.

The following terms, abbreviations and notations will be used herein:

CRS: Cell specific Reference Signal,
PRB: Physical Resource Block,
3GPP: 3rd Generation Partnership Project,
LTE: Long Term Evolution,
LTE-A: LTE Advanced, Release 10 and higher versions of 3GPP LTE,
RF: Radio Frequency,
UE: User Equipment,
SINR: signal-to-interference and noise ratio,
RE: Resource Element,
RB: resource block, e.g., a resource block in frequency direction times slot in time direction,
OFDM: Orthogonal Frequency Division Multiplex,
NodeB: base station,
IRC: Interference Rejection Combining,
(e) ICIC: (enhanced) Inter-Cell Interference Coordination,
MIMO: Multiple Input Multiple Output,
CE: Channel Estimation,
R, RS: Reference signal,
C: Channel,
N: Noise,
I: Interference.

The methods and devices described herein may be based on resource blocks, in particular resource blocks received from radio cells, and clusters. It is understood that comments made in connection with a described method may also hold true for a corresponding device configured to perform the method and vice versa. For example, if a specific method step is described, a corresponding device may include a unit to perform the described method step, even if such a unit is not explicitly described or illustrated in the figures. Further, it is understood that the features of the various exemplary aspects described herein may be combined with each other, unless specifically noted otherwise.

The methods and devices described herein may be implemented in wireless communication networks, in particular communication networks based on mobile communication standards such as LTE, in particular LTE-A and/or OFDM. The methods and devices described below may further be implemented in a base station (NodeB, eNodeB) or a mobile device (or mobile station or User Equipment (UE)). The described devices may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

The methods and devices described herein may be configured to transmit and/or receive radio signals. Radio signals may be or may include radio frequency signals radiated by a radio transmitting device (or radio transmitter or sender) with a radio frequency lying in a range of about 3 Hz to 300 GHz. The frequency range may correspond to frequencies of alternating current electrical signals used to produce and detect radio waves.

The methods and devices described herein after may be designed in accordance to mobile communication standards such as e. g. the Long Term Evolution (LTE) standard or the advanced version LTE-A thereof. LTE (Long Term Evolution), marketed as 4G, 5G LTE and beyond, is a standard for wireless communication of high-speed data for mobile phones and data terminals.

The methods and devices described hereinafter may be applied in OFDM systems. OFDM is a scheme for encoding digital data on multiple carrier frequencies. A large number of closely spaced orthogonal sub-carrier signals may be used to carry data. Due to the orthogonality of the sub-carriers crosstalk between sub-carriers may be suppressed.

The methods and devices described hereinafter may be applied in multi-layer heterogeneous networks. Multi-layer heterogeneous networks (HetNet) may be used in LTE and LTE-Advanced standards to build up the network of not only a single type of eNodeB (homogeneous network), but to deploy eNodeBs with different capabilities, most importantly different Tx-power classes. These eNodeBs may commonly be referred to as macro eNodeBs or macro cells, pico eNodeBs or pico cells and femto/home eNodeBs or femto cells. Alternatively, the term "small cells" might be used as a broader term covering pico and femto cells.

The methods and devices described hereinafter may be applied in eICIC systems. ICIC based on Carrier Aggregation may enable an LTE-A UE to connect to several carriers simultaneously. It not only may allow resource allocation across carriers, it also may allow scheduler based fast switching between carriers without time consuming handover.

The methods and devices described hereinafter may be applied in interference aware receivers such as IRC (Interference Rejection Combining) receivers. IRC is a technique that may be used in an antenna diversity system to suppress co-channel interference by using the cross covariance between the noise in diversity channels. Interference rejection combining (IRC) may be used as an efficient alternative to increase uplink bit rates in areas where cells overlap. The interference rejection combining (IRC) receiver may be effective in improving the cell-edge user throughput because it may suppress inter-cell interference. The IRC receiver may be based on a minimum mean square error (MMSE) criterion, which may require channel estimation and covariance matrix estimation including the inter-cell interference with high accuracy.

The methods and devices described hereinafter may be applied in MIMO systems. Multiple-input multiple-output (MIMO) wireless communication systems employ multiple antennas at the transmitter and at the receiver to increase system capacity and to achieve better quality of service. In spatial multiplexing mode, MIMO systems may reach higher peak data rates without increasing the bandwidth of the system by transmitting multiple data streams in parallel in the same frequency band.

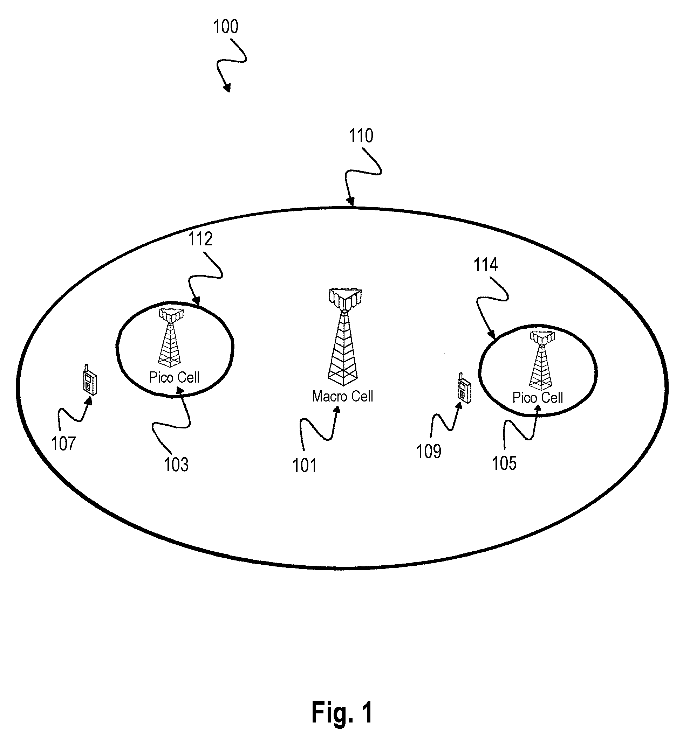

Fig. 1 is a schematic diagram of a heterogeneous network 100 including a macro cell 101 and pico cells 103, 105. The pico base stations 103, 105 may be characterized by substantially lower transmit power as compared to the macro base station 101. Due to the large disparity between the transmit power levels among two type of base stations, the coverage 112, 114 of the pico base station 103, 105 is significantly limited than the coverage 110 of the macro base station 101 as shown in Fig. 1. The larger coverage 110 of the macro cells 101 may attract more users 107, 109 towards high power macro eNodeB although there might not be enough resources to efficiently serve all user terminals. At the same time, the resources of smaller power base station may remain underutilized.

The UEs 107, 109 may include methods and/or devices for generating channel estimation filter coefficients as described in the following in order to improve channel estimation in such environments. Thus, channel estimation allows fast adaptation to dynamic changes for conditions as such as, for example, interference patterns with respect to multiple aggressor cells and synchronization errors. Such channel estimation filtering may be adapted for OFDM-based systems such as LTE-Advanced, in the presence of various challenges and non-idealities such as time-frequency selective channels, time-frequency-selective co-channel interference, symbol timing error, carrier frequency offset, and gain imbalances. Because some of these parameters can be very dynamic in both time-and frequency directions, UEs 107, 109 including methods and/or devices for generating channel estimation filter coefficients according to the disclosure are highly and quickly adaptive to such potentially highly selective channel conditions.

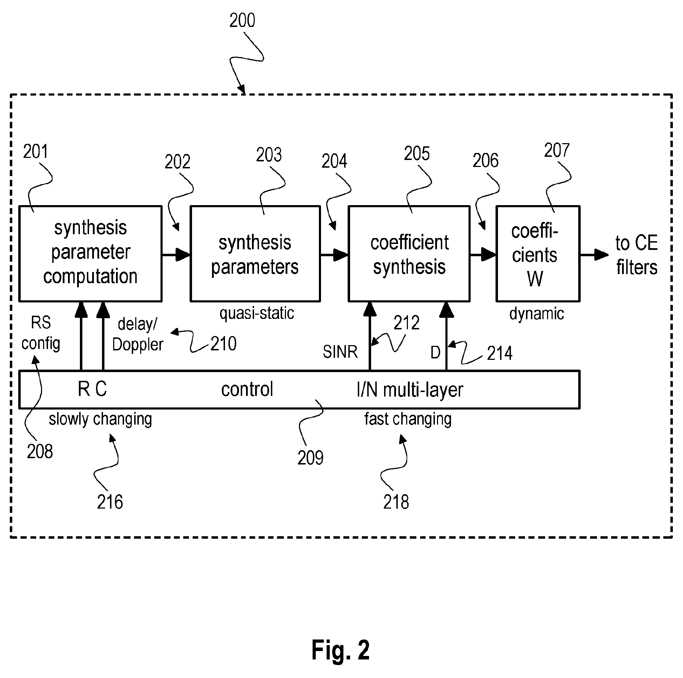

Fig. 2 is a block diagram of a synthesis device 200 for generating channel estimation filter coefficients for a user equipment or data terminal. The synthesis device 200 can be implemented in one physical device including the below described units as shown in Fig. 2. Alternatively, at least some of the below described units can be implemented as separate physical devices such that the below described units form a synthesis system 200.

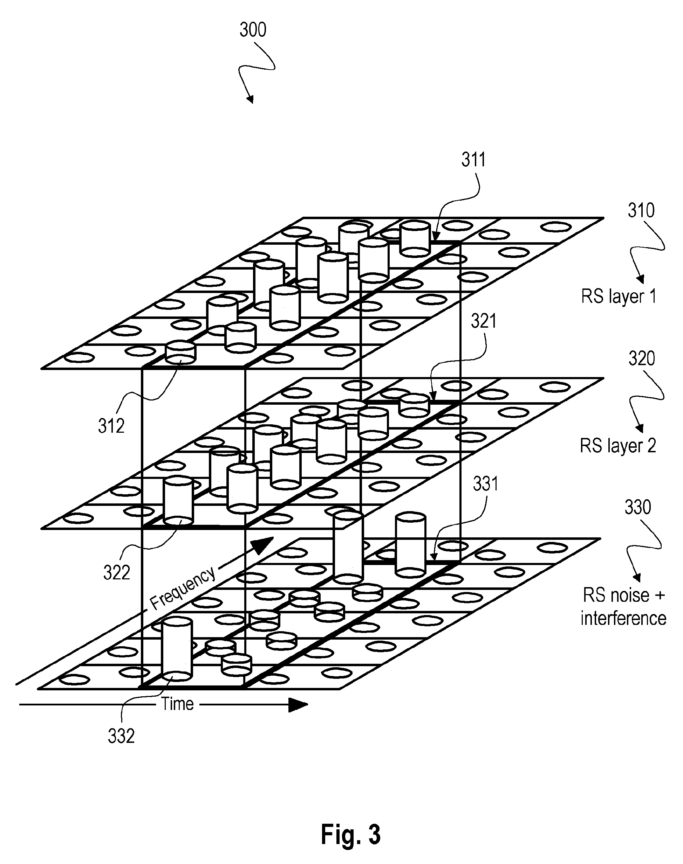

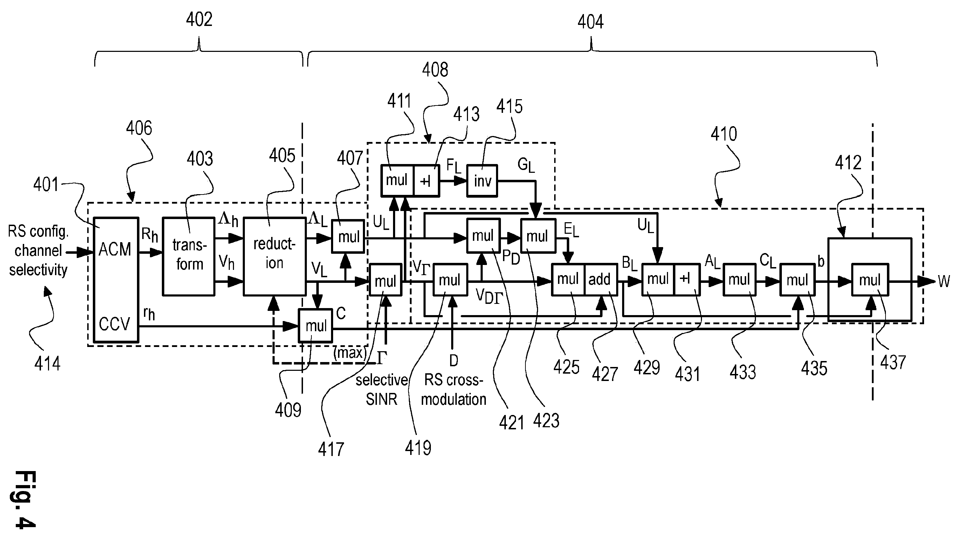

The synthesis device 200 or system, respectively, includes a synthesis parameter generator 201, configured to generate a set of quasi-static synthesis parameters 202 from a reference symbol (RS) time-frequency pattern, e.g. a RS time-frequency pattern 300 as described below with respect to Fig. 3, and a set of slowly changing channel parameters 216. The set of quasi-static synthesis parameters 202 is derived from a channel autocorrelation matrix, e.g. a channel autocorrelation matrix $\mathbf{R}_h$ as described below with respect to Fig. 4, and at least one cross-correlation vector, e.g. cross correlation vectors $\mathbf{r}_h$ as described below with respect to Fig. 4.

The set of slowly changing channel parameters 216 are derived from delay and Doppler power profiles 210 of a physical channel. The synthesis device 200 includes a memory 203 configured to store the set of quasi-static synthesis parameters 202.

The synthesis device 200 or system, respectively, includes a CE filter coefficient generator 205, configured to generate a set of dynamic CE filter coefficients w , 207 based on the set of quasi-static synthesis parameters 202 and a set of dynamic parameters 218 given by a cross modulation $\mathbf{D}$, 214 between RS signals from different cells with cell-specific modulations, and a autocorrelation 212, e.g. a noise and interference SINR autocorrelation $\Gamma$ as described below with respect to Fig. 4.

These colliding S/A-CRS (signal/aggressor cell-specific reference signals), in general, any colliding RS, share the same RS time-frequency pattern 300, thus forming multiple (in LTE-A two) layers on RS positions as illustrated in Fig. 3. The synthesis device may therefore be based on RS layer separation for S-CE according to FeICIC or joint S/A-CE according to NAICS.

A target cell reference signal, e.g. a target cell reference signal 312 as described below with respect to Fig. 3, and at least one aggressor cell reference signal, e.g. an aggressor cell reference signal 322 as described below with respect to Fig. 3, may share at least one resource element on the RS time-frequency pattern 300.

One cell reference signal, e.g. a target cell reference signal 312 as described below with respect to Fig. 3, and at least one other cell reference signal, e.g. an aggressor cell reference signal 322 as described below with respect to Fig. 3, may collide on the RS time-frequency pattern 300.

Each reference signal 312, 322 associated with a particular cell (c) may be modulated by its own cell-specific modulation, e.g. a cell-specific modulation $\mathbf{X}_c$ as described below with respect to Fig. 4. The cell-specific modulations $\mathbf{X}_c$ may also include a symbol rotation due to a time delay or a frequency shift.

The synthesis device 200 or system, respectively, further includes a controller 209, that may be configured to control the CE filter coefficients generator 205 to generate the set of dynamic CE filter coefficients **w ,** 207 based on one or more fast changing parameters of the set of dynamic parameters 218 and based on one or more slow changing parameters of the set of slowly changing channel parameters 216. The at least one fast changing parameter changes over one receive signal observation interval. The at least one slowly changing parameter 216 changes over multiples of the receive signal observation interval.

One receive signal observation interval may correspond to the length of a subframe according to LTE or any other mobile communication standard, for example 1 millisecond in LTE. Alternatively the receive signal observation interval may correspond to the length of a slot according to LTE or any other mobile communication standard, for example 0.5 milliseconds in LTE. It is understood that any other observation interval may be applied, for example according to other or future communication standards. The observation interval may be denoted as the length of a data field captured by the receiver for further processing in terms of time units.

The at least one slow changing parameter may include the channel autocorrelation matrix $\mathbf{R}_h$ and the at least one cross correlation vector $\mathbf{r}_h$. The at least one fast changing parameter may include the cross modulation $\mathbf{D}$, 214 and the noise and interference SINR autocorrelation $\Gamma$, 212.

The CE filter coefficient generator 205 may be configured to generate the set of dynamic CE filter coefficients **w,** 207 to include a first subset of CE filter coefficients for estimating a channel of a first cell, and at least one second subset of CE filter coefficients for estimating a channel of at least one second cell. When generating the set of dynamic CE filter coefficients, the CE filter coefficient generator 205 may consider all signal layers 310, 320, 330 superimposed onto a received RS signal which comprises an RS signal 311 of the first cell, an RS signal 321 of the at least one second cell, and a noise and interference layer 330, e.g. as described below with respect to Fig. 3.

In the case of dual-layer CE filter coefficient generation, the CE filter coefficient generator 205 may be configured to generate the first subset of CE filter coefficients for estimating the channel of the first cell as complex conjugates of the second subset of CE filter coefficients for estimating the channel of the second cell.

The CE filter coefficient generator 205 may be configured to generate the set of dynamic CE filter coefficients **w,** 207 by applying a matrix transformation, e.g. a matrix transformation as described below with respect to Fig. 4, based on an eigenvalue based decomposition, a QR decomposition, a Cholesky decomposition or any other rank-reducing decomposition to a matrix function of the set of quasi-static synthesis parameters 202 and the set of dynamic parameters 218, in order to obtain a rank reduction for the matrix function, e.g. a matrix function as described below with respect to Fig. 4.

The CE filter coefficient generator 205 may be configured to split the matrix function into a first part and a second part which isolate components of the RS signal layers 310, 320 from components of the noise and interference layer 330, e.g. as described below with respect to Fig. 4.

The CE filter coefficient generator 205 may be configured to apply a rank reduction to the matrix function based on the following relation:

$$\left(\mathbf{I} + \Lambda_h \Phi\right)^{-1} \cong \begin{bmatrix} \left(\mathbf{I}_L + \Lambda_L \Phi_{11}\right)^{-1} & -\left(\mathbf{I}_L + \Lambda_L \Phi_{11}\right)^{-1} \Lambda_L \Phi_{12} \\ 0 & \mathbf{I}_{N-L} \end{bmatrix}$$

where $\Lambda_h$, is an original rank eigenvalue matrix of the channel autocorrelation matrix $\mathbf{R}_h$, $\Lambda_L$, is a reduced-rank eigenvalue matrix of the channel autocorrelation matrix $\mathbf{R}_h$, and $\Phi$ is a matrix depending on a function of the channel autocorrelation matrix $\mathbf{R}_h$, the at least one cross correlation vector $\mathbf{r}_h$, the cross modulation $\mathbf{D}$, 214 and the noise and interference SINR autocorrelation $\Gamma$, 212, e.g. as described below with respect to Fig. 4.

The synthesis device 200 or system, respectively, may represent a two-stage framework for dynamic online coefficient computation, featuring the generation of quasi-static synthesis parameters in the first stage, i.e. the synthesis parameter generator 201, followed by dynamic coefficient synthesis in the second stage, i.e. the CE filter coefficient generator 205. As the RS symbols used for CE filtering change dynamically with each new observation (time/frequency subplane), the synthesis device 200 may be used for performing multi-layer RS channel estimation. The dynamic part, i.e. the CE filter coefficient generator 205, copes with both multiple RS layers (RS-to-RS colliders) with dynamically varying modulation, and non-RS interference plus noise with dynamically varying SIR.

The synthesis device 200 or system, respectively, provides a low-complexity solution to quasi-optimal channel estimation filter coefficient computation in the presence of both RS and non-RS interference with dynamic and highly selective profiles. The new concept comprises the following two parts:

stage 1: generation 201 of a semi-static set of coefficient synthesis parameters 202 based on the system parameters (RS, channel, noise) 216 which are slowly changing with time,

stage 2: computation 205 of dynamic CE coefficients 206 from the semi-static synthesis parameters 202 (stage 1) and the dynamic parameters 218 pertaining to both RS and non-RS interference types, i.e., multi-layer RS modulation and SINR profile, respectively.

The new dual-layer processing part of the synthesis device 200 can also serve as the core element of iterative and effective multi-layer channel estimation schemes. Channel estimation and other functions relying on it (detection, parameter estimation) benefit from dynamic CE coefficient generation in many respects: Both the quasi-static synthesis parameters and the dynamic CE coefficients are generated on demand, i.e., only when the relevant RS/channel parameters (stage 1) or interference parameters (stage 2) change significantly within the span of CE filtering. This saves processing power and reduces the memory footprint: The CE coefficients generated by the synthesis device 200 are (quasi-) optimal, regardless of the selectivity, dynamics, and profile of both RS and non-RS interference. The computational complexity of CE coefficient synthesis is reduced significantly with respect to the conventional computation of optimal Wiener filter coefficients.

Fig. 3 is a schematic diagram of a reference symbol time-frequency pattern 300 comprising a first signal layer 310, a second signal layer 320 and a noise and interference layer 330. A receive signal received by a receiver and provided to the synthesis device 200 described above with respect to Fig. 2 may be represented as an RS time-frequency pattern 300 including a first signal layer 310 with reference signals 312, e.g. from a serving cell, a second signal layer 320 with reference signals 322, e.g. from an aggressor cell and a noise and interference layer 330 with interferer reference signals 332 and noise. The receive signal may include further data and/or control resource elements on the RS time-frequency pattern 300 that are not depicted in Fig. 3.

The RS time-frequency pattern 300 may include further second signal layers (not depicted in Fig. 3) having further reference signals, e.g. from further aggressor cells.

The three layers 310, 320, 330 depicted in Fig. 3 are superimposed on the RS time-frequency pattern 300. The reference signals 312, 322, 332 of a specific layer 310, 320, 330 are arranged on specific sections 311, 321, 331 of the respective layer 310, 320, 330.

The reference symbol time-frequency pattern 300 may be part of a resource block according to LTE, e.g., a resource block (RB) in frequency direction times slot (e.g. 0.5 milliseconds) in time direction, for example a RB having one slot of $N_{symb}$ symbols (for example $N_{symb}=7$) in time direction and $N_{SC}$ subcarriers in frequency direction (for example

$N_{SC}$=12). One symbol in time direction times one symbol in frequency direction is referred to as resource element (RE).

Fig. 4 is a block diagram of an exemplary synthesis device 400 for generating channel estimation filter coefficients for a user equipment. The synthesis device 400 is an exemplary embodiment of the synthesis device 200 described above with respect to Fig. 2. The synthesis device 400 can be implemented in one physical device including the below described units. Alternatively, at least some of the below described units can be implemented as separate physical devices such that the below described units form a synthesis system 400.

The synthesis device 400 or system, respectively, includes a synthesis parameter generator 406, configured to generate a set of quasi-static synthesis parameters $\Lambda_L$, $\mathbf{V}_L$, $\mathbf{U}_L = \mathbf{V}_L\Lambda_L$ and $\mathbf{c} = \mathbf{V}_L^H \mathbf{r}_h$ from a reference symbol (RS) time-frequency pattern, e.g. a RS time-frequency pattern 300 as described above with respect to Fig. 3, and a set of slowly changing channel parameters 414.

The synthesis parameter generator 406 includes a correlation processing module 401, a transform module 403, a reduction module 405, a first multiplier module 407 and a second multiplier module 409.

The set of quasi-static synthesis parameters $\Lambda_L$, $\mathbf{V}_L$, $\mathbf{U}_L = \mathbf{V}_L\Lambda_L$ and $\mathbf{c} = \mathbf{V}_L^H \mathbf{r}_h$ is derived from a channel autocorrelation matrix $\mathbf{R}_h$ and at least one cross-correlation vector $\mathbf{r}_h$ which are processed in the correlation processing module 401, e.g. as described below. The transform module 403 which is coupled to the correlation processing module 401 computes the parameters $\Lambda_h$, $\mathbf{V}_h$ based on the channel autocorrelation matrix $\mathbf{R}_h$, e. g. as described below. The reduction module 405 which is coupled to the transform module 403 computes the parameters $\Lambda_L$, $\mathbf{V}_L$ based on the parameters $\Lambda_h$, $\mathbf{V}_h$, e.g. as described below. The first multiplier module 407 which is coupled to the reduction module 405 computes the parameter $\mathbf{U}_L = \mathbf{V}_L\Lambda_L$. The second multiplier module 409 which is coupled to the reduction module 405 and the correlation processing module 401 computes the parameter $\mathbf{c} = \mathbf{V}_L^H \mathbf{r}_h$. The set of slowly changing channel parameters 414 are derived from delay and Doppler power profiles of a physical channel.

The synthesis device 400 or system, respectively, includes a memory (not depicted in Fig. 4) to store the set of quasi-static synthesis parameters $\Lambda_L$, $\mathbf{V}_L$, $\mathbf{U}_L = \mathbf{V}_L\Lambda_L$ and $\mathbf{c} = \mathbf{V}_L^H \mathbf{r}_h$.

The synthesis device 400 or system, respectively, includes a CE filter coefficient generator 408, 410, configured to generate a set of dynamic CE filter coefficients w based on the set of quasi-static synthesis parameters $\Lambda_L$, $\mathbf{V}_L$, $\mathbf{U}_L = \mathbf{V}_L\Lambda_L$ and $\mathbf{c} = \mathbf{V}_L^H \mathbf{r}_h$ and a set of dynamic parameters $\Gamma$,$\mathbf{D}$ given by a cross modulation between RS signals from different cells with cell-specific modulations $\mathbf{D}$, and a noise and interference SINR autocorrelation $\Gamma$ 212, being the inverse of a noise and interference autocorrelation $\Sigma$.

The CE filter coefficient generator 408, 410 includes a SINR part 408 and a dual-layer RS modulation part 410. In a general implementation of the synthesis device 400, the dual-layer RS modulation part 410 is a multi-layer RS modulation part that has a similar structure as the dual-layer RS modulation part 410. However, due to simplicity reasons only the dual-layer RS modulation part 410 is described in the following.

The SINR part 408 includes a third multiplier module 411, a first identity matrix adder module 413, a first inverter module 415 and a fourth multiplier module 417.

The third multiplier module 411 and the first identity matrix adder module 413 are coupled to the first multiplier module 407 to compute the parameter $\mathbf{F}_L = \mathbf{I}_L + \mathbf{U}_L^H \mathbf{V}_\Gamma$. The first inverter module 415 is coupled to the third multiplier module 411 and the first identity matrix adder module 413 to compute the parameter $\mathbf{G}_L = \mathbf{F}_L^{-1}$. The fourth multiplier module 417 is coupled to the reduction module 405 to compute the parameter $\mathbf{V}_\Gamma = \Gamma\mathbf{V}_L$.

The dual-layer RS modulation part 410 includes a fifth multiplier module 421, a sixth multiplier module 423, a seventh multiplier module 419, an eighth multiplier module 425, an adder module 427, a ninth multiplier module 429, a second identity matrix adder module 431, a second inverter module 433, a tenth multiplier module 435 and an expansion module 412 including an eleventh multiplier module 437.

The fifth multiplier module 421 is coupled to the first multiplier module 407 to compute the parameter $\mathbf{P}_D = \mathbf{U}_L^H \mathbf{V}_{D\Gamma}^*$. The sixth multiplier module 423 is coupled to the fifth multiplier module 421 and the first inverter module 415 to compute the parameter $\mathbf{E}_L = \mathbf{G}_L\mathbf{P}_D$.

The seventh multiplier module 419 is coupled to the fourth multiplier module 417 to compute the parameter $\mathbf{V}_{D\Gamma} = \mathbf{D}\mathbf{V}_\Gamma$. The eighth multiplier module 425 and the adder module 427 are coupled to the sixth and seventh multiplier modules 423, 419 to compute the parameter $\mathbf{B}_L = \mathbf{V}_\Gamma - \mathbf{V}_{D\Gamma}\mathbf{E}_L$. The ninth multiplier module 429 and the second identity matrix adder module 431 are coupled to the first multiplier module 407 and the eighth multiplier module 425 and the adder module 427 to compute the parameter $\mathbf{A}_L = \mathbf{I}_L + \mathbf{U}_L^H \mathbf{B}_L$. The second inverter module 433 is coupled to the ninth multiplier module 429 and the second identity matrix adder module 431 to compute the parameter $\mathbf{C}_L = \mathbf{A}_L^{-1}$.

The tenth multiplier module 435 is coupled to the second inverter module 433 to compute the parameter $\mathbf{b} = \mathbf{C}_L \mathbf{c}$. The expansion module 412 with the eleventh multiplier module 437 is coupled to the tenth multiplier module 435 to compute the parameter $\mathbf{w} = \mathbf{B}_L \mathbf{b}$.

The correlation processing module 401, the transform module 403 and the reduction module 405 are performing computing operations in the full-dimension observation space 402, while the remaining modules are performing computing operations in the reduced-dimension subspace 404.

The full-dimension observation space 402 may correspond to the time-frequency space of one receive signal observation interval. The reduced-dimension subspace 404 may correspond to the subspace of the full-dimension observation space 402 in which resource elements are present, i.e. have a power above a predetermined threshold. The reduced-dimension subspace 404 may be derived from the full dimension observation space 402 by applying eigenvalue-based decomposition or other related methods as described below.

As described above with respect to Fig. 2, one receive signal observation interval may correspond to the length of a subframe according to LTE or any other mobile communication standard, for example 1 millisecond in LTE. Alternatively the receive signal observation interval may correspond to the length of a slot according to LTE or any other mobile communication standard, for example 0.5 milliseconds in LTE. It is understood that any other observation interval may be applied, for example according to other or future communication standards. The observation interval may be denoted as the length of a data field captured by the receiver for further processing in terms of time units.

The functionality of the various above-indexed modules is described in the following. In order to estimate a particular channel $\mathbf{h}_{ct}$ (cell c, target RE position (s) t) from the received RS signal $\mathbf{y} = \sum_c \mathbf{X}_c \mathbf{h}_c + \mathbf{n}$ (layered RS channels $\mathbf{h}_c$ modulated by symbols $\mathbf{X}_c$ possibly rotated by frequency or time shifts), the optimal filter and its coefficients $\mathbf{w}_{ct}$ (length-$N$ Wiener filter) are given by

$$\hat{h}_{ct} = \mathbf{w}_{ct}^H \mathbf{y} \qquad\qquad (\text{Eq. 1a})$$

$$\mathbf{w}_{ct} = \left( \sum_c \mathbf{X}_c \mathbf{R}_{hc} \mathbf{X}_c^H + \mathbf{\Sigma} \right)^{-1} \mathbf{X}_c \mathbf{r}_{hct} \qquad\qquad (\text{Eq. 1b})$$

with $\mathbf{R}_{hc} = E\left\{ \mathbf{h}_c \mathbf{h}_c^H \right\}$ the c-th RS channel autocorrelation matrix (ACM), $\mathbf{r}_{hct} = E\left\{ \mathbf{h}_c h_{ct}^* \right\}$ the cross-correlation vector (CCV) between the c-th RS and target RE channel, and $\mathbf{\Sigma} = E[\mathbf{n}\mathbf{n}^H]$ the noise ACM, which for the general case of noise and interference SINR according to Figure 2 reads:

$$\mathbf{\Sigma} = \text{diag}\left( \sigma_1^2, \sigma_2^2, \dots \sigma_N^2 \right) \qquad \sigma_n^2 \text{ noise power on } n\text{-th RS sample} \qquad (\text{Eq. 2a})$$

$$\mathbf{\Gamma} = \mathbf{\Sigma}^{-1} = \text{diag}\left( \gamma_1, \gamma_2, \dots, \gamma_N \right) \qquad \gamma_n \text{ SINR on } n\text{-th RS sample} \qquad (\text{Eq. 2b})$$

For the most important case of dual-layer CE with same channel ACM $\mathbf{R}_{hc} = \mathbf{R}_h$ and CCM $\mathbf{r}_{ht} = E\left\{ \mathbf{h} h_i^* \right\}$ for both cells (index t dropped), the optimal coefficients for cell-1 and 2 channel estimation favorably turn out to be complex conjugates of each other (only $\mathbf{w} = \mathbf{w}_1$ to be computed):

$$\mathbf{w}_1 = \left( \mathbf{R}_h + \mathbf{D}\mathbf{R}_h\mathbf{D}^H + \mathbf{\Sigma} \right)^{-1} \mathbf{r}_h \qquad\qquad (\text{Eq. 3a})$$

$$\mathbf{w}_2 = \mathbf{w}_1^* \qquad\qquad (\text{Eq. 3b})$$

with cross-modulation $\mathbf{D} = \mathbf{X}_2 \mathbf{X}_1^H$ possibly including cross-rotation.

Reduced-complexity CE coefficient generation can be devised through a structural analysis of the channel by a number of techniques, e.g., eigenanalysis $\mathbf{R}_h = \mathbf{V}_h \mathbf{\Lambda}_h \mathbf{V}_h^H$, QR decomposition $\mathbf{R}_h = \mathbf{V}_h \mathbf{U}_h$, or Cholesky decomposition $\mathbf{R}_h = \mathbf{L}_h [\mathbf{D}_h] \mathbf{L}_h^H$.

Depending on the channel selectivity, the channel ACM $\mathbf{R}_h$ is reducible to lower rank $L<N$, i.e., $\mathbf{R}_h \cong \mathbf{V}_L \mathbf{\Lambda}_L \mathbf{V}_L^H$ with eigenvalues $\Lambda_L = \Lambda_h(1:L,1:L)$ ($LxL$) and eigenvectors $\mathbf{V}_L = \mathbf{V}_h(1:N,1:L)$ ($NxL$).

Unfortunately, this does not translate into the observation ACM $\mathbf{R}=\mathbf{R}_h+\mathbf{DR}_h\mathbf{D}^H+\Sigma$ (Eq 3a) since the presence of the second term (modulated aggressor channel) essentially doubles the rank (to 2L) of $\mathbf{R}$, thereby erasing most of the rank reduction potential.

Despite this daunting diagnosis, one can nevertheless arrive at the desired reduced-complexity solution of this disclosure by deriving a mapping between subspaces that isolates the RS modulation from the channel selectivity such that rank reduction becomes possible.

The inverse observation ACM $\mathbf{Q}=\mathbf{R}^{-1}$ (needed to solve Eq 3a) can be reformulated as

$$\mathbf{Q} = \mathbf{D}\mathbf{Q}_0\mathbf{D}^H\mathbf{V}_h \left(\mathbf{I} + \mathbf{\Lambda}_h\left[\mathbf{V}_h^H\mathbf{D}\mathbf{Q}_0\mathbf{D}^H\mathbf{V}_h\right]\right)^{-1}\mathbf{V}_h^H \qquad (\text{Eq. 4a})$$

$$\mathbf{Q}_0 = \mathbf{\Gamma} \cdot \mathbf{V}_h \left(\mathbf{I} + \mathbf{\Lambda}_h\left[\mathbf{V}_h^H\mathbf{\Gamma}\mathbf{V}_h\right]\right)^{-1}\mathbf{V}_h^H \qquad (\text{Eq. 4b})$$

Thanks to pre-multiplication of $\mathbf{\Phi} = \mathbf{V}_h^H\mathbf{D}\mathbf{Q}_0\mathbf{D}^H\mathbf{V}_h$ by the eigenvalue matrix $\Lambda_h$, partitioning of $\Lambda_h$ and $\Phi$ of the inner term $(\mathbf{I}+\Lambda_h\Phi)^{-1}$ into L- / (N-L)-dim submatrices (subspace / null space) yields

$$\left(\mathbf{I} + \mathbf{\Lambda}_h\mathbf{\Phi}\right)^{-1} \cong \begin{bmatrix} \left(\mathbf{I}_L + \mathbf{\Lambda}_L\mathbf{\Phi}_{11}\right)^{-1} & -\left(\mathbf{I}_L + \mathbf{\Lambda}_L\mathbf{\Phi}_{11}\right)^{-1}\mathbf{\Lambda}_L\mathbf{\Phi}_{12} \\ \mathbf{0} & \mathbf{I}_{N-L} \end{bmatrix} \qquad (\text{Eq. 5})$$

Further using $\mathbf{V}_h^H\mathbf{r}_h \cong \begin{bmatrix} \mathbf{V}_L^H\mathbf{r}_h \\ \mathbf{0} \end{bmatrix}$, inserting $\mathbf{\Phi} = \mathbf{V}_h^H\mathbf{D}\mathbf{Q}_0\mathbf{D}^H\mathbf{V}_h$ and expanding (Eqs 3,4,5) yields the following expression for near-optimal CE coefficients (here w=w, for serving cell 1):

$$\mathbf{w} = \left[\mathbf{V}_\Gamma - \mathbf{V}_{D\Gamma}\mathbf{G}_L\mathbf{U}_L^H\mathbf{V}_{D\Gamma}^*\right] \cdot \left(\mathbf{I}_L + \mathbf{U}_L^H\left[\mathbf{V}_\Gamma - \mathbf{V}_{D\Gamma}\mathbf{G}_L\mathbf{U}_L^H\mathbf{V}_{D\Gamma}^*\right]\right)^{-1}\mathbf{V}_L^H\mathbf{r}_h \qquad (\text{Eq. 6})$$

with quantities $\mathbf{V}_\Gamma = \Gamma\mathbf{V}_L$, $\mathbf{V}_{D\Gamma} = \mathbf{D}\mathbf{V}_\Gamma$, $\mathbf{G}_L = \left(\mathbf{I}_L + \mathbf{U}_L^H\mathbf{V}_\Gamma\right)^{-1}$.

From this expression, the following implementation-friendly embodiment can be derived: Channel-dependent part (quasi-static):

$$\mathbf{\Lambda}_h, \mathbf{V}_h \quad \rightarrow \mathbf{\Lambda}_L, \mathbf{V}_L \qquad \mathbf{U}_L = \mathbf{V}_L\mathbf{\Lambda}_L \qquad \mathbf{c} = \mathbf{V}_L^H\mathbf{r}_h \qquad (\text{Eq. 7a})$$

SINR-dependent part (quasi-static or dynamic):

$$\mathbf{V}_\Gamma = \mathbf{\Gamma}\mathbf{V}_L \qquad \mathbf{F}_L = \mathbf{I}_L + \mathbf{U}_L^H\mathbf{V}_\Gamma \qquad \mathbf{G}_L = \mathbf{F}_L^{-1} \qquad (\text{Eq. 7b})$$

RS-modulation-dependent part (dynamic):

$$\mathbf{V}_{D\Gamma} = \mathbf{D}\mathbf{V}_{\Gamma} \quad \mathbf{P}_D = \mathbf{U}_L^H \mathbf{V}_{D\Gamma}^* \qquad \mathbf{E}_L = \mathbf{G}_L \mathbf{P}_D \qquad \mathbf{B}_L = \mathbf{V}_{\Gamma} - \mathbf{V}_{D\Gamma}\mathbf{E}_L \qquad (\text{Eq. 7c})$$

$$\mathbf{A}_L = \mathbf{I}_L + \mathbf{U}_L^H \mathbf{B}_L \qquad \mathbf{C}_L = \mathbf{A}_L^{-1} \qquad \mathbf{b} = \mathbf{C}_L \mathbf{c} \qquad \mathbf{w} = \mathbf{B}_L \mathbf{b} \qquad (\text{Eq. 7d})$$

Figure 4 shows an embodiment of dual-layer subspace CE coefficient synthesis (here eigensystem-based), featuring computation of quasi-static channel synthesis parameters ($\Lambda_h$, $\mathbf{V}_h$, $\Lambda_L$, $\mathbf{V}_L$, $\mathbf{U}_L = \mathbf{V}_L\Lambda_L$, $\mathbf{c} = \mathbf{V}_L^H \mathbf{r}_h$ (Eq 7a)), SINR-dependent quantities ($\mathbf{V}_{\Gamma}$, $\mathbf{F}_L$, $\mathbf{G}_L = \mathbf{F}_L^{-1}$ (Eq 7b)), and dynamic RS-modulation-dependent quantities ($\mathbf{V}_{D\Gamma}$, $\mathbf{P}_D$, $\mathbf{E}_L$, $\mathbf{B}_L$ (Eq 7c) and $\mathbf{A}_L$, $\mathbf{C}_L$, $\mathbf{b}=\mathbf{C}_L\mathbf{c}$, $\mathbf{w} =\mathbf{B}_L\mathbf{b}$ (Eq 7d)). Note that all critical dynamic operations are done in the reduced-dimension subspace 404.

Another embodiment is QRD-based coefficient synthesis, featuring simplified channel parameter computation (single QRD producing $\mathbf{U}_h$, $\mathbf{V}_h$ thus $\mathbf{U}_L$, $\mathbf{V}_L$ directly). All subsequent processing is then identical to that of Figure 4.

The new solution also effectuates that neither the aggressor RS modulation nor the SINR selectivity have an impact on the choice of L. Hence, the required dimension L can be determined in advance as a function of channel selectivity and the SNR (max SINR) alone.

This reduced-complexity solution covers not only any kind of channel and SINR selectivity but, in addition, any kind of serving/aggressor-cell modulation, including any symbol rotation due to a time/delay or frequency/Doppler shift, and including pathological cases such as collinear S/A modulations occasionally arising in the received RS vector.

The three parts 406, 408, 410 of this scheme (see Figure 4) can be processed independently on-demand. This solution has a superior implementation of the channel estimation function supporting highly dynamic environments and signal reception conditions, in particular, the presence of a colliding RS aggressor on top of selective channels and selective interference.

This solution provides improved UE robustness against co-channel interference in LTE (or other OFDM-based) cellular (or other interference-prone) networks, resulting in higher network capacity, user throughput, more stable user experience, and reduced complexity.

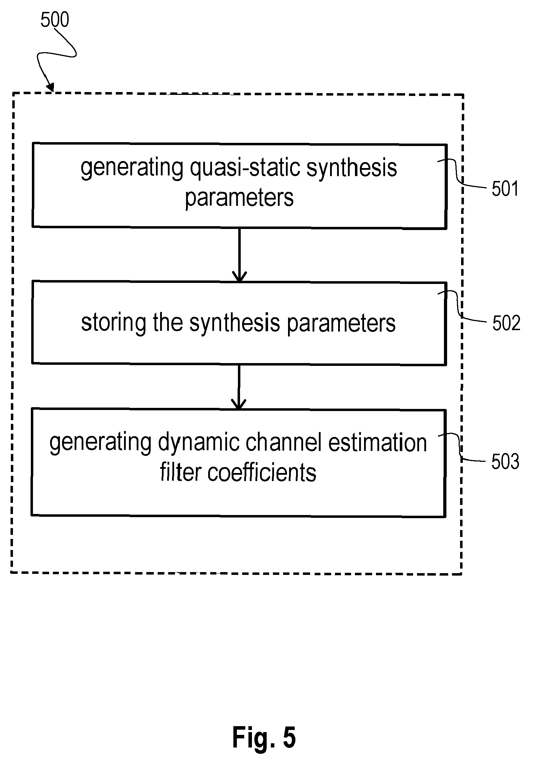

Fig. 5 is a schematic diagram of a method 500 for generating a set of channel estimation filter coefficients for a user equipment.

The method 500 includes generating 501 a set of quasi-static synthesis parameters, e.g. a set of quasi-static synthesis parameters 202 as described above with respect to Figure 2 or Figure 4, from a reference symbol (RS) time-frequency pattern, e.g. an RS time-frequency pattern 300 as described above with respect to Fig. 4, and a set of slowly changing channel parameters, e.g. parameters 216 as described above with respect to Figure 2 or Figure 4, wherein the set of quasi-static synthesis parameters 202 is derived from a channel autocorrelation matrix $\mathbf{R}_h$ and at least one cross-correlation vector $\mathbf{r}_h$, e.g. as described above with respect to Figure 2 or Figure 4, and the set of slowly changing channel parameters 216 is derived from delay and Doppler power profiles 210 of a physical channel, e.g. as described above with respect to Figure 2 or Figure 4.

The method 500 includes storing 502 the set of quasi-static synthesis parameters 202, e.g. as described above with respect to Figure 2 or Figure 4.

The method 500 includes generating 503 a set of dynamic CE filter coefficients, e.g. dynamic CE filter coefficients w, 207 as described above with respect to Figure 2 or Figure 4, based on the set of quasi-static synthesis parameters 202, and a set of dynamic parameters 218 given by a cross modulation, e.g. a cross modulation **D,** 214 as described above with respect to Figure 2 or Figure 4, between RS signals from different cells (c) with cell-specific modulations, and a noise and interference autocorrelation, e.g. a noise and interference SINR autocorrelation $\Gamma$, 212 as described above with respect to Figure 2 or Figure 4.

The generating 503 the set of dynamic CE filter coefficients **w,** 207 may be based on applying a rank reduction to a matrix function of the channel autocorrelation matrix $\mathbf{R}_h$, the at least one cross-correlation vector $\mathbf{r}_h$, the cross modulation **D,** 214 and the noise and interference SINR autocorrelation $\Gamma$, 212.

The method 500 may include further blocks corresponding to specific processing modules as described above with respect to Figure 2 or Figure 4.

The method 500 provides a solution to the above-mentioned problems. The method 500 provides a solution for online CE filter coefficient computation which handles all three signal types and their selectivities simultaneously, i.e. the serving-cell RS signal with respect to channel selectivity (delay/Doppler) and any S-RS modulation, the aggressor-cell RS signal with respect to channel selectivity (delay/Doppler) and any A-RS modulation and the non-RS interference/noise with respect to interference power selectivity and any SINR profile.

The method 500 provides a solution for online CE filter coefficient computation which handles dynamic interference profiles, where both RS modulation and non-RS SINR profile may change rapidly, in general, per observation window (time/frequency subplane).

The method 500 provides a solution for online CE filter coefficient computation which exhibits quasi-optimal performance, i.e. its performance is very close to that of optimal Wiener filtering.

The method 500 provides a solution for online CE filter coefficient computation which has low complexity, in particular complexity that is significantly lower than Wiener coefficient computation. The method 500 provides a solution for online CE filter coefficient computation with low complexity, especially for longer filters.

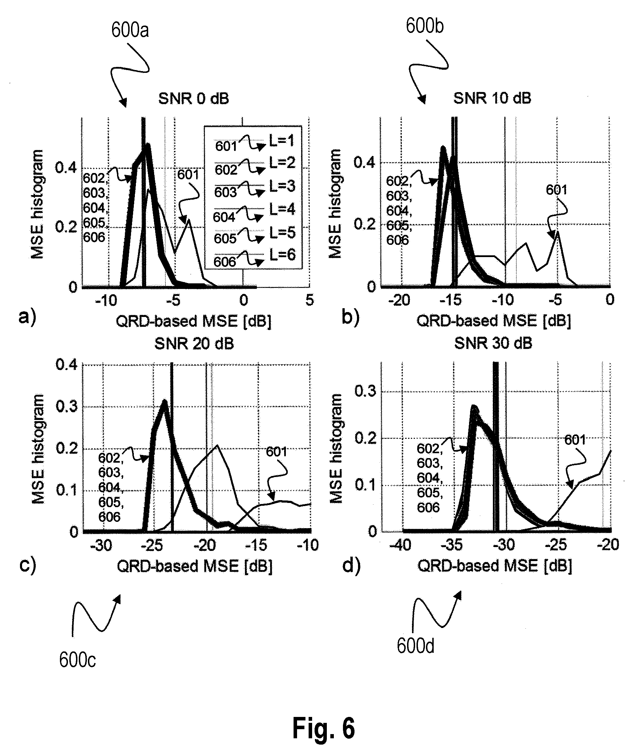

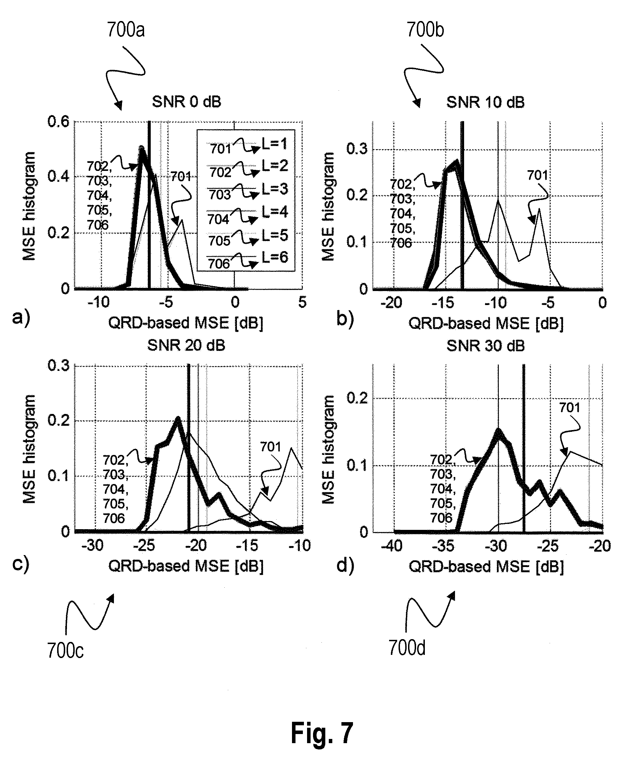

Figures 6a, 6b, 6c, 6d and 7a, 7b, 7c, 7d display the MSE (mean square error) performance for an example of dual-layer RS CE coefficient synthesis according to the disclosure. In Figures 6a, 6b, 6c and 6d 8-tap filtering is applied with SNR 0,10,20,30 dB and no interference (SINR = SNR), while in Figures 7a, 7b, 7c and 7d 8-tap filtering is applied with SNR 0,10,20,30 dB and noise and interference SINR of -10dB for 2 taps.

The curves 601 (Figures 6a-6d) and 701 (Figures 7a-7d) illustrate the performance for a subspace order $L=1$. The curves 602 (Figures 6a-6d) and 702 (Figures 7a-7d) illustrate the performance for a subspace order $L=2$. The curves 603 (Figures 6a-6d) and 703 (Figures 7a-7d) illustrate the performance for a subspace order $L=3$. The curves 604 (Figures 6a-6d) and 704 (Figures 7a-7d) illustrate the performance for a subspace order $L=4$. The curves 605 (Figures 6a-6d) and 705 (Figures 7a-7d) illustrate the performance for a subspace order $L=5$. The curves 606 (Figures 6a-6d) and 706 (Figures 7a-7d) illustrate the performance for a subspace order $L=6$, where in this example the full channel rank space is $N=8$.

The MSE histograms shown in the figures reflect the (pseudo-) randomness of RS modulation symbols of both S/A-RS layers. One observes that (quasi-)optimal performance (bold curves) is achieved for low or moderate subspace orders L (between 2 and 3 in this example, see the description with respect to Fig. 4), depending on the channel selectivity and the SNR. This is also true if non-RS interference with strongly selective SINR pattern is present (Figures 7a, 7b, 7c, 7d); although degraded with respect to non-RS interference being absent, the performance is still optimal given the presence of this additional disturbance.

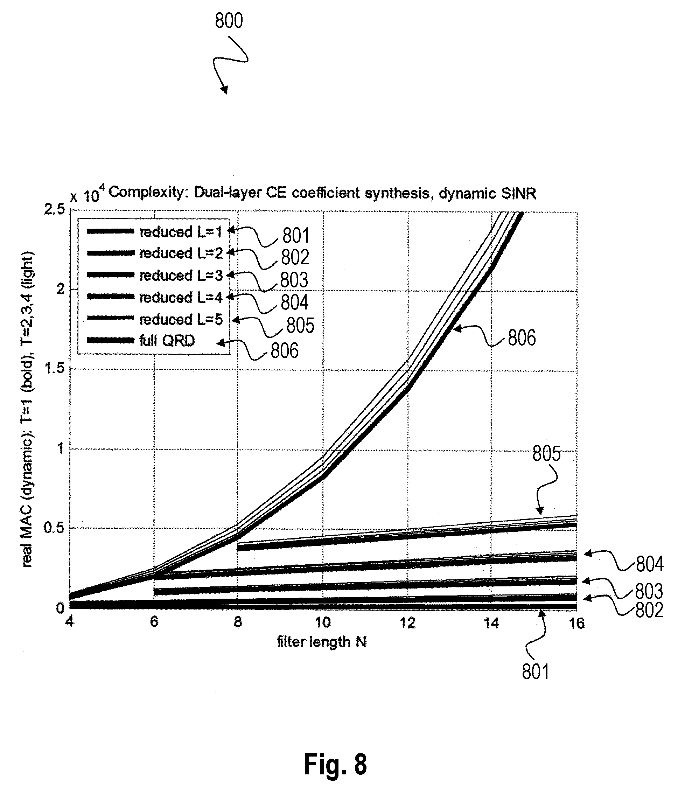

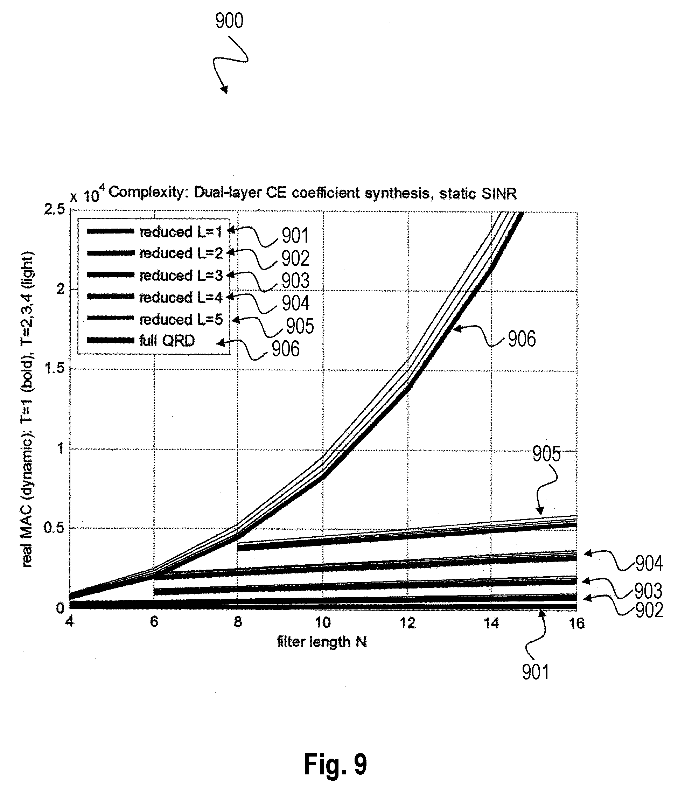

Figures 8 and 9 display the complexity of dual-layer CE coefficient synthesis (detailed in the description with respect to Fig. 4) in terms of multiply-and-add (MAC) operations per dynamic coefficient generation. Compared with the baseline (full $N$-dim QRD), subspace coefficient synthesis requires much less MAC operations, especially for higher filter lengths N and low/moderate channel rank L.

The curves 801 (Figure 8) and 901 (Figure 9) illustrate the performance for a subspace order $L=1$. The curves 802 (Figure 8) and 902 (Figure 9) illustrate the performance for a subspace order $L=2$. The curves 803 (Figure 8) and 903 (Figure 9) illustrate the performance for a subspace order $L=3$. The curves 804 (Figure 8) and 904 (Figure 9) illustrate the performance for a subspace order L=4. The curves 805 (Figure 8) and 905 (Figure 9) illustrate the performance for a subspace order $L=5$. The curves 806 (Figure 8) and 906 (Figure 9) illustrate the performance for a subspace order $L=6$.

The methods, systems and devices described herein may be implemented as software in a Digital Signal Processor (DSP), in a micro-controller or in any other side-processor or as hardware circuit on a chip or within an application specific integrated circuit (ASIC).

Embodiments described in this disclosure can be implemented in digital electronic circuitry, or in computer hardware, firmware, software, or in combinations thereof, e.g. in available hardware of mobile devices or in new hardware dedicated for processing the methods described herein.

The present disclosure also supports a computer program product including computer executable code or computer executable instructions that, when executed, causes at least one computer to execute the performing and computing blocks described herein, in particular the method 500 as described above with respect to Fig. 5. Such a computer program product may include a readable storage medium storing program code thereon for use by a processor, the program code comprising instructions for performing any of the method 500 blocks as described above.

EXAMPLES

The following examples pertain to further embodiments. Example 1 is a synthesis device for generating a set of dynamic channel estimation (CE) filter coefficients for a user equipment, the synthesis device comprising: a synthesis parameter generator, configured to generate a set of quasi-static synthesis parameters from a reference symbol (RS) time-frequency pattern and a set of slowly changing channel parameters, wherein the set of quasi-static synthesis parameters is derived from a channel autocorrelation matrix and at least one cross-correlation vector, and the set of slowly changing channel parameters are derived from delay and Doppler power profiles of a physical channel; a memory configured to store the set of quasi-static synthesis parameters; and a CE filter coefficient generator, configured to generate a set of dynamic CE filter coefficients based on the set of quasi-static synthesis parameters, and a set of dynamic parameters given by a cross modulation between RS signals from different cells with cell-specific modulations, and a noise and interference autocorrelation.

In Example 2, the subject matter of Example 1 can optionally include that a target cell reference signal and at least one aggressor cell reference signal share at least one resource element on the RS time-frequency pattern.

In Example 3, the subject matter of Example 2 can optionally include that one cell reference signal and at least one other cell reference signal collide on the RS time-frequency pattern.

In Example 4, the subject matter of any one of Examples 1-3 can optionally include that each reference signal associated with a particular cell is modulated by its own cell-specific modulation.

In Example 5, the subject matter of Example 4 can optionally include that the cell-specific modulations also include a symbol rotation due to a time delay or a frequency shift.

In Example 6, the subject matter of any one of Examples 1-5 can optionally include a controller, configured to control the CE filter coefficients generator to generate the set of dynamic CE filter coefficients based on at least one fast changing parameter of the set of dynamic parameters which changes over one receive signal observation interval and based on at least one slow changing parameter of the set of slowly changing channel parameters (216) which changes over multiples of the receive signal observation interval.

In Example 7, the subject matter of Example 6 can optionally include that the at least one slow changing parameter comprises the channel autocorrelation matrix and the at least one cross correlation vector; and that the at least one fast changing parameter comprises the cross modulation and the noise and interference autocorrelation.

In Example 8, the subject matter of any one of Examples 1-7 can optionally include that the CE filter coefficient generator is configured to generate the set of dynamic CE filter coefficients comprising a first subset of CE filter coefficients for estimating a channel of a first cell, and at least one second subset of CE filter coefficients for estimating a channel of at least one second cell, considering all signal layers superimposed onto a received RS signal which comprises an RS signal of the first cell, an RS signal of the at least one second cell, and a noise and interference layer.

In Example 9, the subject matter of Example 8 can optionally include that in the case of dual-layer CE filter coefficient generation, the CE filter coefficient generator is configured to generate the first subset of CE filter coefficients for estimating the channel of the first cell as complex conjugates of the second subset of CE filter coefficients for estimating the channel of the second cell.

In Example 10, the subject matter of Example 9 can optionally include that the CE filter coefficient generator is configured to generate the set of dynamic CE filter coefficients by applying a matrix transformation based on one of an eigenvalue based decomposition, a QR decomposition or a Cholesky decomposition to a matrix function of the set of quasi-static synthesis parameters and the set of dynamic parameters, in order to obtain a rank reduction for the matrix function.

In Example 11, the subject matter of any one of Examples 8-10 can optionally include that the CE filter coefficient generator is configured to split the matrix function into a first part and a second part which isolate components of the RS signal layers from components of the noise and interference layer.

In Example 12, the subject matter of any one of Examples 10-11 can optionally include that the CE filter coefficient generator is configured to apply a rank reduction to the matrix function based on the following relation:

$$\left(\mathbf{I} + \boldsymbol{\Lambda}_h \boldsymbol{\Phi}\right)^{-1} \cong \begin{bmatrix} \left(\mathbf{I}_L + \boldsymbol{\Lambda}_L \boldsymbol{\Phi}_{11}\right)^{-1} & -\left(\mathbf{I}_L + \boldsymbol{\Lambda}_L \boldsymbol{\Phi}_{11}\right)^{-1} \boldsymbol{\Lambda}_L \boldsymbol{\Phi}_{12} \\ \mathbf{0} & \mathbf{I}_{N-L} \end{bmatrix}$$

where $\Lambda_h$ is an original rank eigenvalue matrix of the channel autocorrelation matrix, $\Lambda_L$ is a reduced-rank eigenvalue matrix of the channel autocorrelation matrix, and $\Phi$ is a matrix depending on a function of the channel autocorrelation matrix, the at least one cross correlation vector, the cross modulation and the noise and interference autocorrelation.

Example 13 is a method for generating a set of channel estimation (CE) filter coefficients for a user equipment, the method comprising: generating a set of quasi-static synthesis parameters from a reference symbol (RS) time-frequency pattern and a set of slowly changing channel parameters, wherein the set of quasi-static synthesis parameters is derived from a channel autocorrelation matrix and at least one cross-correlation vector, and the set of slowly changing channel parameters is derived from delay and Doppler power profiles of a physical channel; storing the set of quasi-static synthesis parameters; generating a set of dynamic CE filter coefficients based on the set of quasi-static synthesis parameters, and a set of dynamic parameters given by a cross modulation between RS signals from different cells with cell-specific modulations, and a noise and interference autocorrelation.

In Example 14, the subject matter of Example 13 can optionally include that generating the set of dynamic CE filter coefficients is based on applying a rank reduction to a matrix function of the channel autocorrelation matrix, the at least one cross-correlation vector, the cross modulation and the noise and interference autocorrelation.

Example 15 is a computer readable non-transitory medium on which computer instructions are stored which when executed by a computer, cause the computer to perform the method of one of Examples 13-14.

In Example 16, the subject matter of Example 14 can optionally include that applying the rank reduction transforms the matrix function to a reduced-rank matrix function having a reduced-rank of a small integer number.

In Example 17, the subject matter of Example 16 can optionally include that the small integer number is one of 2 or 3.

Example 18 is a channel estimation (CE) filter coefficient generator circuit, comprising: a parameter generator circuit, configured to generate a set of first parameters based on a channel autocorrelation and at least one cross-correlation of a reference symbol (RS) time-frequency pattern received over a communication channel, and based on delay and Doppler power profiles of the communication channel; a memory configured to store the set of first parameters; a filter coefficient generator circuit, configured to generate a set of CE filter coefficients based on the set of first parameters modified by a set of second parameters which account for a cross modulation between RS signals from different cells and a noise and interference autocorrelation.

In Example 19, the subject matter of Example 18 can optionally include that the filter coefficient generator circuit is configured to generate the set of CE filter coefficients for each receive signal observation interval; and that the parameter generator circuit is configured to generate the set of first parameters based on multiples of the receive signal observation interval.

In Example 20, the subject matter of any one of Examples 18-19 can optionally include that a target cell reference signal and at least one aggressor cell reference signal share at least one resource element on the RS time-frequency pattern.

In Example 21, the subject matter of Example 20 can optionally include that one cell reference signal and at least one other cell reference signal are colliding on the RS time-frequency pattern.

In Example 22, the subject matter of any one of Examples 18-19 can optionally include that each reference signal associated with a particular cell is modulated by its own cell-specific modulation.

In Example 23, the subject matter of Example 22 can optionally include that the cell-specific modulations also include a symbol rotation due to a time delay or a frequency shift.

In Example 24, the subject matter of any one of Examples 18-19 can optionally include that the filter coefficient generator circuit is configured to generate the set of CE filter coefficients to comprise a first subset of CE filter coefficients for estimating a channel of a first cell, and at least one second subset of CE filter coefficients for estimating a channel of at least one second cell.

In Example 25, the subject matter of Example 24 can optionally include that the filter coefficient generator circuit is configured to generate the set of CE filter coefficients based on a superimposition of an RS signal layer of the first cell, an RS signal layer of the at least one second cell and a noise and interference layer.

In Example 26, the subject matter of Example 25 can optionally include that in the case of dual-layer CE filter coefficient generation, the filter coefficient generator circuit is configured to generate the first subset of CE filter coefficients as complex conjugates of the second subset of CE filter coefficients.

In Example 27, the subject matter of Example 26 can optionally include that the filter coefficient generator circuit is configured to generate the set of CE filter coefficients based on a matrix function of the set of first parameters and the set of second parameters.

In Example 28, the subject matter of Example 27 can optionally include that the filter coefficient generator circuit is configured to apply a rank reduction to the matrix function to obtain a reduced-rank matrix function of the set of first parameters and the set of second parameters.

In Example 29, the subject matter of Example 28 can optionally include that the filter coefficient generator circuit is configured to apply a matrix transformation based on one of an eigenvalue based decomposition, a QR decomposition or a Cholesky decomposition to the matrix function to obtain the reduced-rank matrix function.

In Example 30, the subject matter of Example 29 can optionally include that the filter coefficient generator circuit is configured to split the matrix function into a first part and a second part which isolate components of the RS signal layers from components of the noise and interference layer.

Example 31 is a device for generating channel estimation (CE) filter coefficients, the device comprising: means for generating a set of first parameters based on a channel autocorrelation and at least one cross-correlation of a reference symbol (RS) time-frequency pattern received over a communication channel, and based on delay and Doppler power profiles of the communication channel; means for storing the set of first parameters; means for generating a set of CE filter coefficients based on the set of first parameters modified by a set of second parameters which account for a cross modulation between RS signals from different cells and a noise and interference autocorrelation.

In Example 32, the subject matter of Example 31 can optionally include that the means for generating the set of CE filter coefficients is configured to generate the set of CE filter coefficients for each receive signal observation interval; and that the means for generating the set of first parameters is configured to generate the set of first parameters based on multiples of the receive signal observation interval.

Example 33 is a system for generating channel estimation (CE) filter coefficients, the system comprising: a first subsystem configured to generate a set of first parameters based on a channel autocorrelation and at least one cross-correlation of a reference symbol (RS) time-frequency pattern received over a communication channel, and based on delay and Doppler power profiles of the communication channel; a second subsystem, configured to store the set of first parameters; a third subsystem, configured to generate a set of CE filter coefficients based on the set of first parameters modified by a set of second parameters which account for a cross modulation between RS signals from different cells and a noise and interference autocorrelation.

In Example 34, the subject matter of Example 33 can optionally include that the third subsystem is configured to generate the set of CE filter coefficients for each receive signal observation interval; and that the first subsystem is configured to generate the set of first parameters based on multiples of the receive signal observation interval.

Example 35 is a synthesis system for generating a set of dynamic channel estimation (CE) filter coefficients for a user equipment, the synthesis system comprising: a synthesis parameter generator, configured to generate a set of quasi-static synthesis parameters from a reference symbol (RS) time-frequency pattern and a set of slowly changing channel parameters, wherein the set of quasi-static synthesis parameters is derived from a channel autocorrelation matrix and at least one cross-correlation vector, and the set of slowly changing channel parameters are derived from delay and Doppler power profiles of a physical channel; a memory configured to store the set of quasi-static synthesis parameters; and a CE filter coefficient generator, configured to generate a set of dynamic CE filter coefficients based on the set of quasi-static synthesis parameters, and a set of dynamic parameters given by a cross modulation between RS signals from different cells with cell-specific modulations, and a noise and interference autocorrelation.

In Example 36, the subject matter of Example 35 can optionally include that a target cell reference signal and at least one aggressor cell reference signal share at least one resource element on the RS time-frequency pattern.

In addition, while a particular feature or aspect of the invention may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Furthermore, it is understood that aspects of the invention may be implemented in discrete circuits, partially integrated circuits or fully integrated circuits or programming means. Also, the terms "exemplary", "for example" and "e.g." are merely meant as an example, rather than the best or optimal.

Although specific aspects have been illustrated and described herein, it will be appreciated by those of ordinary skill in the art that a variety of alternate and/or equivalent implementations may be substituted for the specific aspects shown and described without departing from the scope of the present invention. This application is intended to cover any adaptations or variations of the specific aspects discussed herein.

**Claims**

1. A synthesis device (200) for generating a set of dynamic channel estimation (CE) filter coefficients (207) for a user equipment, the synthesis device (200) comprising:

   a synthesis parameter generator (201), configured to generate a set of quasi-static synthesis parameters (202) from a reference symbol (RS) time-frequency pattern (300) and a set of slowly changing channel parameters (216), wherein the set of quasi-static synthesis parameters (202) is derived from a channel autocorrelation matrix ($\mathbf{R}_h$) and at least one cross-correlation vector ($\mathbf{r}_h$), and the set of slowly changing channel parameters (216) are derived from delay and Doppler power profiles (210) of a physical channel;
   a memory (203) configured to store the set of quasi-static synthesis parameters (202); and
   a CE filter coefficient generator (205), configured to generate a set of dynamic CE filter coefficients (w, 207) based on the set of quasi-static synthesis parameters (202), and a set of dynamic parameters (218) given by a cross modulation ($D$, 214) between RS signals from different cells (c) with cell-specific modulations, and a noise and interference autocorrelation ($\Gamma$, 212).

2. The synthesis device (200) of claim 1,
   wherein a target cell reference signal (312) and at least one aggressor cell reference signal (322) share at least one resource element on the RS time-frequency pattern (300).

3. The synthesis device (200) of claim 2,
   wherein one cell reference signal (312) and at least one other cell reference signal (322) collide on the RS time-frequency pattern (300).

4. The synthesis device (200) of one of the preceding claims,
   wherein each reference signal (312, 322) associated with a particular cell (c) is modulated by its own cell-specific modulation ($X_c$).

5. The synthesis device (200) of claim 4,
   wherein the cell-specific modulations ($X_c$) also include a symbol rotation due to a time delay or a frequency shift.

6. The synthesis device (200) of one of the preceding claims, comprising:

   a controller (209), configured to control the CE filter coefficients generator (205) to generate the set of dynamic CE filter coefficients ($w$, 207) based on at least one fast changing parameter of the set of dynamic parameters (218) which changes over one receive signal observation interval and based on at least one slow changing parameter of the set of slowly changing channel parameters (216) which changes over multiples of the receive signal observation interval.

7. The synthesis device (200) of claim 6,
   wherein the at least one slow changing parameter comprises the channel autocorrelation matrix ($\boldsymbol{R}_h$) and the at least one cross correlation vector ($\boldsymbol{r}_h$) ; and
   wherein the at least one fast changing parameter comprises the cross modulation ($D$, 214) and the noise and interference autocorrelation ($\Gamma$, 212).

8. The synthesis device (200) of one of the preceding claims,
   wherein the CE filter coefficient generator (205) is configured to generate the set of dynamic CE filter coefficients ($w$, 207) comprising a first subset of CE filter coefficients for estimating a channel of a first cell, and at least one second subset of CE filter coefficients for estimating a channel of at least one second cell, considering all signal layers (310, 320, 330) superimposed onto a received RS signal which comprises an RS signal (311) of the first cell, an RS signal (321) of the at least one second cell, and a noise and interference layer (330).

9. The synthesis device (200) of claim 8,
   wherein, in the case of dual-layer CE filter coefficient generation, the CE filter coefficient generator (205) is configured to generate the first subset of CE filter coefficients for estimating the channel of the first cell as complex conjugates of the second subset of CE filter coefficients for estimating the channel of the second cell.

10. The synthesis device (200) of claim 9,
    wherein the CE filter coefficient generator (205) is configured to generate the set of dynamic CE filter coefficients ($w$, 207) by applying a matrix transformation based on one of an eigenvalue based decomposition, a QR decomposition or a Cholesky decomposition to a matrix function of the set of quasi-static synthesis parameters (202) and the set of dynamic parameters (218), in order to obtain a rank reduction for the matrix function.

11. The synthesis device (200) of one of claims 8 to 10,
    wherein the CE filter coefficient generator (205) is configured to split the matrix function into a first part and a second part which isolate components of the RS signal layers (310, 320) from components of the noise and interference layer (330).

12. The synthesis device of claim 10 or 11,
    wherein the CE filter coefficient generator (205) is configured to apply a rank reduction to the matrix function based on the following relation:

$$\left(\mathbf{I} + \boldsymbol{\Lambda}_h \boldsymbol{\Phi}\right)^{-1} \cong \begin{bmatrix} \left(\mathbf{I}_L + \boldsymbol{\Lambda}_L \boldsymbol{\Phi}_{11}\right)^{-1} & -\left(\mathbf{I}_L + \boldsymbol{\Lambda}_L \boldsymbol{\Phi}_{11}\right)^{-1} \boldsymbol{\Lambda}_L \boldsymbol{\Phi}_{12} \\ \mathbf{0} & \mathbf{I}_{N-L} \end{bmatrix}$$

where $\Lambda_h$ is an original rank eigenvalue matrix of the channel autocorrelation matrix (R$_h$), $\Lambda_L$ is a reduced-rank eigenvalue matrix of the channel autocorrelation matrix (R$_c$), and $\Phi$ is a matrix depending on a function of the channel autocorrelation matrix ($R_h$), the at least one cross correlation vector ($\boldsymbol{r}_h$), the cross modulation ($D$, 214) and the noise and interference autocorrelation ($\Gamma$, 212).

13. A method (500) for generating a set of channel estimation (CE) filter coefficients for a user equipment, the method (500) comprising:

generating (501) a set of quasi-static synthesis parameters (202) from a reference symbol (RS) time-frequency pattern (300) and a set of slowly changing channel parameters (216), wherein the set of quasi-static synthesis parameters (202) is derived from a channel autocorrelation matrix ($R_h$) and at least one cross-correlation vector ($r_h$), and the set of slowly changing channel parameters (216) is derived from delay and Doppler power profiles (210) of a physical channel;

storing (502) the set of quasi-static synthesis parameters (202);

generating (503) a set of dynamic CE filter coefficients ($w$, 207) based on the set of quasi-static synthesis parameters (202), and a set of dynamic parameters (218) given by a cross modulation ($D$, 214) between RS signals from different cells (c) with cell-specific modulations, and a noise and interference autocorrelation ($\Gamma$, 212).

14. The method (500) of claim 13,
wherein generating (503) the set of dynamic CE filter coefficients ($w$, 207) is based on applying a rank reduction to a matrix function of the channel autocorrelation matrix ($R_h$), the at least one cross-correlation vector ($r_h$), the cross modulation ($D$, 214) and the noise and interference autocorrelation ($\Gamma$, 212).

15. A computer readable non-transitory medium on which computer instructions are stored which when executed by a computer, cause the computer to perform the method of one of claims 13 or 14.

100

110

112

114

Pico Cell

Macro Cell

Pico Cell

107

103

101

109

105

**Fig. 1**

200

201        202        203   204        205   206        207

```
  synthesis              synthesis          coefficient         coeffi-
  parameter       →      parameters    →     synthesis     →    cients     →   to CE
  computation                                                   W              filters
```

RS                 delay/                          quasi-static              dynamic
config             Doppler        210
                                                SINR    212        D    214

```
        R C              control           I/N multi-layer
```

slowly changing                                fast changing

208

216                              209              218

**Fig. 2**

300

311

310

RS layer 1

321

312

320

RS layer 2

322

331

330

RS noise +
interference

Frequency

332

Time

**Fig. 3**

Fig. 4

500

generating quasi-static synthesis
parameters — 501

storing the synthesis parameters — 502

generating dynamic channel estimation
filter coefficients — 503

Fig. 5

Fig. 6

**Fig. 7**

800

Fig. 8

900

**Fig. 9**

Europäisches
Patentamt

European
Patent Office

Office européen
des brevets

# EUROPEAN SEARCH REPORT

Application Number

EP 16 15 9014

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YIN HAIFAN ET AL: "Decontaminating pilots in massive MIMO systems", 2013 IEEE INTERNATIONAL CONFERENCE ON COMMUNICATIONS (ICC), IEEE, 9 June 2013 (2013-06-09), pages 3170-3175, XP032522053, ISSN: 1550-3607, DOI: 10.1109/ICC.2013.6655031 [retrieved on 2013-11-04] * the whole document * | 1-15 | INV. H04L25/02 |
| A | JIANCHAO XIE ET AL: "A low complexity channel estimation algorithm for massive MIMO system", 2015 10TH INTERNATIONAL CONFERENCE ON COMMUNICATIONS AND NETWORKING IN CHINA (CHINACOM), IEEE, 15 August 2015 (2015-08-15), pages 702-707, XP032915200, DOI: 10.1109/CHINACOM.2015.7498028 [retrieved on 2016-06-22] * the whole document * | 1-15 | |

TECHNICAL FIELDS
SEARCHED    (IPC)

H04L

The present search report has been drawn up for all claims

| Place of search | Date of completion of the search | Examiner |
|---|---|---|
| Munich | 7 September 2016 | Baltersee, Jens |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)